# EUROPEAN PATENT SPECIFICATION

(11) **EP 3 056 039 B1**
(45) Date of publication and mention of the grant of the patent: **05.05.2021**
(21) Application number: 13783870.2
(22) Date of filing: 08.10.2013
(51) Int. Cl.: H04W 16/14, H04W 16/06, H04L 5/00

(54) **METHOD AND CONTROL MEANS FOR ALLOCATING SUBCARRIERS OF A FREQUENCY SPECTRUM TO OPERATORS**
VERFAHREN UND STEUERUNGSMITTEL ZUR ZUWEISUNG VON UNTERTRÄGERN EINES FREQUENZSPEKTRUMS AN BETREIBER
PROCÉDÉ ET MOYEN DE COMMANDE POUR ATTRIBUER DES SOUS-PORTEUSES D'UN SPECTRE DE FRÉQUENCES À DES OPÉRATEURS

(43) Date of publication of application: 17.08.2016
(73) Proprietor: Huawei Technologies Duesseldorf GmbH, 40549 Düsseldorf (DE)
(72) Inventor: LUO, Jian, 80992 Munich (DE); EICHINGER, Josef, 80992 Munich (DE); SCHULZ, Egon, 80992 Munich (DE)
(74) Representative: Gill Jennings & Every LLP
(86) International application number: PCT/EP2013/070947
(87) International publication number: WO 2015/051828

(56) References cited:
- "Electromagnetic compatibility and Radio spectrum Matters (ERM); Converged Fixed-Nomadic Broadband Wireless Access (BWA) Part 1: Frequencies above 3.4 GHz; System reference document", ETSI DRAFT; BRAN44D039 (DRAFT TR 102 453-1 V111_074_EDITORIAL REVISION), EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.1.1_0.7.4, 3 February 2009 (2009-02-03), pages 1-48, XP014049207, [retrieved on 2009-02-03]
- GBENGA SALAMI ET AL: "A Comparison Between the Centralized and Distributed Approaches for Spectrum Management", IEEE COMMUNICATIONS SURVEYS, IEEE, NEW YORK, NY, US, vol. 13, no. 2, 1 April 2011 (2011-04-01), pages 274-290, XP011321706, ISSN: 1553-877X, DOI: 10.1109/SURV.2011.041110.00018
- "ERM_36_096a1r1 ECC(08)096 Annex10 - Draft ECC Report on 2.6 GHz terminal BEM ; ERM_36_096a1r1 ECC(08)096 Annex10 - Draft ECC Report on 2.6 GHz terminal BEM", IEEE DRAFT; ERM_36_096A1R1 ECC(08)096 ANNEX10 - DRAFT ECC REPORT ON 2.6 GHZ TERMINAL BEM, IEEE-SA, PISCATAWAY, NJ USA, vol. 802.11, 3 February 2009 (2009-02-03), pages 1-76, XP017698895, [retrieved on 2009-02-03]

## Description

### TECHNICAL FIELD

The present invention refers to a method and a control means for allocating subcarriers of a frequency spectrum to operators in a wireless multi carrier communication system, as well as a corresponding base station.

The frequency spectrum comprises a plurality of subcarriers. The wireless communication system comprises the central control means and at least two base stations for wireless communication with terminals in the wireless communication system on the basis of the subcarriers which form the multi carriers of the communication system. The at least two base stations of the wireless communication system are operated by at least two operators. The subcarriers are allocated to these at least two operators and these at least two operators, which operate the at least two base stations, then allocate the subcarriers to the terminals which have subscribed or are part of the respective operator. The present invention suggests a specific way how the subcarriers of the frequency spectrum are allocated to the at least two operators and to solve various problems resulting from this inter-operator spectrum sharing.

ETSI TR 102 453-1 v 1.1.1 describes an approach to using limited spectrum, including the use of masks.

### BACKGROUND

Conventionally, the allocation of a frequency spectrum and the licensing to operators for mobile broad band (MBB) has been done in an exclusive manner, i.e. each operator obtains and licenses a fixed certain part of the frequency spectrum for exclusive usage. Such an exclusive frequency spectrum licensing and allocation has the advantages of a certain guarantee of quality of service (QoS), good interference management and a high degree of market certainty which was considered necessary to create adequate investment and innovation incentives. However, as the demand on mobile data traffic grows exponentially, the problem of "spectrum shortage" arises, i.e. there will be not enough spectrum bands or subcarriers, especially in the range below 6 Ghz, to be exclusively allocated and licensed to different operators. In other words, there is a need for more available frequency spectrum or a better usage of the currently available frequency spectrum. Even assumed that there is a sufficient amount of spectrum bands available in the available frequency spectrums for exclusive allocation, the mobile operators will face the pressure of a high spectrum cost. Such high costs for licensing and operation will become less and less acceptable. Furthermore, an exclusive allocation of frequency spectrum bands has the disadvantage of a low flexibility and frequency spectrum. Even assumed that there is a sufficient amount of spectrum bands available in the available frequency spectrums for exclusive allocation, the mobile operators will face the pressure of a high spectrum cost. Such high costs for licensing and operation will become less and less acceptable. Furthermore, an exclusive allocation of frequency spectrum bands has the disadvantage of a low flexibility and low scalability, i.e. it often leads to an underutilization of the available resources in certain locations/regions and/or in certain periods of time. In other words, the efficiency of the usage of the available frequency spectrum is low. Thus, frequency spectrum sharing becomes a necessary and important tool to meet future spectrum requirements. On the one hand, mobile operators will have to share the available frequency spectrum with other communication or non-communication systems. On the other hand, mobile operators will have to share at least certain amounts, if not all, of the available frequency spectrum with each other. Actually, both sharing cases may occur simultaneously, for example, several operators may share a frequency band with a radar service in a primary/secondary manner, while they share the available frequency band with each other on an equal basis.

In the prior art, inter-operator frequency spectrum sharing has been suggested for some communication networks. But such sharing is normally suggested in combination with radio access network, RAN, sharing, which limits the general application of such spectrum sharing solutions. Also, inter-operator frequency spectrum sharing solutions without RAN sharing have also been proposed. It has to be noted, however, that such solutions only work well with a perfect frequency synchronization between the different operators, which is generally difficult to achieve without RAN sharing. A perfect frequency synchronization can for example be defined as a sufficient frequency synchronization accuracy to enable a multi carrier based spectrum sharing without additional guard bands in adjacent spectrum parts which are allocated to different operators.

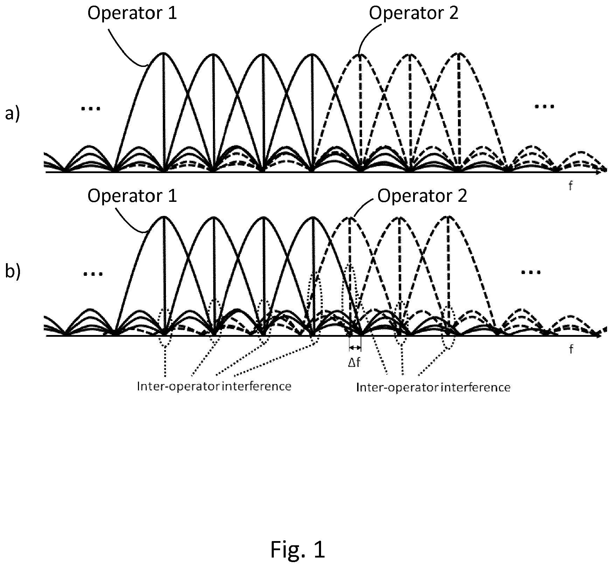

In future wireless communication systems, a considerable part of the allocation of the available frequency spectrum will have to be done in a dynamic way and to sharing parties/operators. This can for example be done under a licensed shared access, LSA, framework, where the frequency band of an incumbent user, for example a radar service, is temporarily licensed to multiple operators in a certain location and for a certain time period. Another example would be that the regulator licenses a spectrum band to multiple operators without fixed boundaries between the spectrum bands allocated to the different operators, so that the operators can coordinate their spectrum usage according to mutual agreement and/or specific or varying sharing rules. In respective of the scenario under which the spectrum is shared between operators, the key problem is the allocation of a certain available frequency spectrum band for shared usage to multiple, i.e. at least two, operators. In previously suggested frequency spectrum sharing techniques, Orthogonal Frequency-Division Multiplexing (OFDM) waveform is used, and fragments of the frequency spectrum, i.e. frequency subcarriers of the frequency spectrum, are allocated to the operators in an orthogonal manner. Orthogonal hereby means that a specific subcarrier, or a specific group of subcarriers, is only allocated to a specific operator, but not at the same time allocated to a different operator. At a given point of time, each subcarrier is therefore allocated to a specific operator, but not to two operators at the same time. The mutual interference between adjacent spectrum fragments consisting of subcarriers allocated to different operators can therefore be avoided by such orthogonal allocation of the resource blocks, i.e. subcarrier fragments. However, it has to be noted that such mutual interference avoidance is only possible when the different operators have perfect frequency synchronization. In this case, the subcarriers of one operator lie in the zeroes of the signal spectrum of the other operators. An example is shown in Fig. 1a for a first operator 1 and a second operator 2. The signal spectrum of the first operator 1 is shown with solid lines, and the signal spectrum of the second operator 2 is shown with dashed lines. Due to the perfect frequency synchronization, the subcarriers of operator 1 lie in the zeros of the signal spectrum of operator 2 and vice versa. However, if there is a frequency synchronization error Δf between operator 1 and operator 2, there will be a mutual interference resulting in a low signal to interference ratio, SIR, of the operators and a low spectral efficiency. Fig. 1b shows such an example with a frequency synchronization error Δf between operator 2 and 1, resulting in rather large interferences in the signal spectrum.

### SUMMARY

The object of the present invention is therefore to provide a method and a control means for allocating subcarriers of a frequency spectrum to operators in a wireless multi carrier communication system of the type described above, in which a mutual interference between different operators is reduced or even avoided, while still achieving a high efficiency of the usage of the available frequency spectrum and still providing flexibility to the operators to adapt their signal characteristics, e.g. signal structures, and the allocated transmission resources individually and flexibly.

The above object is achieved by the solution provided in the enclosed independent claims. Advantageous implementations are defined in the respective dependent claims.

The method for allocating subcarriers of a frequency spectrum to operators in a wireless multi carrier communication system according to the present invention can provide the advantages of reducing or even avoiding mutual interference between different operators, while still achieving a high efficiency of the usage of the available frequency spectrum and still providing flexibility to the operators to adapt their signal characteristics, e.g. signal structures, and the allocated transmission resources individually and flexibly. Further advantages are described below in relation to implementation forms of the first aspect of the present invention, as well as a second and a third aspect of the present invention and their respective implementation forms.

It is to be noted that the wireless multi carrier communication system in which the present invention works and is implemented could be based on any kind of present or future multi carrier system comprising a plurality of frequency subcarriers which span a certain frequency spectrum band. The frequency subcarriers could have a constant width and spacing, or could have a flexible and adaptive width and spacing. Possible but not limiting implementations could be based on filter bank based multi carriers (FBMC), generalized frequency division multiplexing (GFDM) wave forms and so forth. A further possible but not limiting requirement on the multi carriers could be a low radiation outside of the fragments and thus a low inter-operator inference and/or low guard band overhead and/or high spectrum usage efficiency. Also, the multi carrier system of the present invention may, but not have to be, backwards compatible with existing multi carrier systems, such as orthogonal frequency division multiplexing, OFDM, systems.

Generally, the wireless multi carrier communication system of the present invention, which comprises a central control means and at least two base stations as defined, could be defined for any geographical size, for example in a cell as in a traditional cellular wireless communication system, a larger region or even a country.

The term base station as used and defined throughout the present application is a physically separate entity which is adapted to wirelessly exchange signaling and content data with terminals allocated to the base station. An operator is a legal entity responsible for operating one or more base stations. In the frame of the present application, two or more operators could be allocated to one base station to communicate with the respective terminals of their users via this base station. Also, alternatively and additionally, a base station could be allocated to only a single operator. It has to be noted, that, throughout the present application, the description of functionalities, features, characteristics and so forth of an operator or operators refers to the respective entities in which these functionalities, features, characteristics and so forth are implemented. For example, interference between different operators to which adjacent fragments are allocated may refer to interference caused between a first and a second base station which are respectively allocated to different operators. In another example, when discussing frequency synchronization between the different operators to which adjacent fragments are allocated, frequency synchronization between different base stations operated by respectively different operators may be the relevant value to be considered. In this case, the relevant entities in which the operator functionalities are implemented or to which the operator functionalities are allocated, are the base stations of the communication system. Additional or alternative operator functionalities could be implemented in or allocated to other physical or functional entities of the core network. The term terminal refers to terminal devices used by users which are allocated to and have contracts with the respective operators. Such terminals may include but are not limited to cell phones, wireless phones, personal digital assistants, tablets, photo computers of any kind, and so forth.

One advantageous feature of the present invention is that, at a given point in time, one fragment consisting of at least one subcarrier is only allocated to one operator, but not to another operator of the wireless multi carrier communication system. In other words, a fragment allocated to one operator does not overlap with another fragment allocated to a different operator at any given point in time. However, since the allocation of fragments to operators according to the present invention is flexible and can vary in time, one fragment or parts of a fragment allocated to one operator at one timepoint can be allocated to a different operator at another timepoint.

Further, it has to be noted that the frequency spectrum consisting of the plurality of subcarriers can be a contiguous or non-contiguous frequency spectrum. This means that the frequency spectrum, from which fragments in the form of at least one respective subcarrier are allocated to respective operators, can consist of a plurality of subcarriers which are respectively adjacent to each other, or can consist of different parts of the frequency spectrum which are not immediately adjacent but distant from each other, wherein the other parts could be allocated to other services, for example public services or the like. Also, in the frame of the present invention, one or more fragments of the frequency spectrum could be allocated to a single operator, wherein these allocated fragments are not necessarily immediately adjacent to each other, but could be spaced a part within the frequency spectrum. In relation to the radiation mask, which is forwarded by the central control means to the base stations according to the present invention, it has to be noted that in the case in which one fragment of the frequency spectrum is allocated to one operator and an adjacent spectrum is allocated to a different operator, such a radiation mask, in case that the central control means determines that the frequency synchronization between the two operators is not sufficient, could be allocated to either one of the operators, or to both operators. In case that the frequency synchronization of the two operators is very good or even perfect, no radiation mask could be allocated to each of the operators.

It is further to be noted that the subcarrier distribution, which is determined by the central control means can be flexibly determined regularly in time or irregularly depending on the occurrence of certain conditions or situations. This allows a very flexible and efficient use of the available frequency spectrum. In a second step, i.e. the step after the subcarrier distribution to the operators, each operator then allocates the subcarriers in the fragments of the frequency spectrum which were allocated to this operator to the terminal which are allocated to this specific operator. This second allocation step of allocating the resources from the operator to the terminals could for example be done in an even more flexible way in shorter time periods as compared to the determining and establishing step of the subcarrier distribution by the central control means. This two stage spectrum allocation allows an extremely flexible usage and allocation of the system resources to operators and terminals.

It has to be noted that all devices, elements, units and means described in the present application could be implemented by software or hardware elements or any kind of combination thereof. All steps which are performed by the various entities described in the present application as well as the functionality described to be performed by the various entities are intended to mean that the respective entity is adapted to or configured to perform the respective steps and functionalities. Even if in the following description of specific embodiments, a specific functionality or step to be performed by a general entity is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above aspects and implementation forms of the present invention will be explained in the following description of specific embodiments in relation to the enclosed drawings, in which
Figs. 1a and 1b show a respective schematic visualization of OFDM signal wave forms of two operators without and with interference;
Figs. 2a and 2b show respective schematic overviews of a first and a second embodiment of the present invention;
Figs. 3a and 3b show a schematic overview over a contiguous and a non-contiguous frequency spectrum, respectively;
Fig. 4 shows a visualization of the subcarriers in the frequency band and their respective subcarrier spacing/subcarrier width;
Fig. 5 shows a schematic example of a power density in relation to a fragment;
Fig. 6 shows a more specific implementation example of the first embodiment shown in Fig. 2a; and
Fig. 7 shows a more specific implementation example of the embodiment shown in Fig. 2b.

### DETAILED DESCRIPTION OF EMBODIMENTS

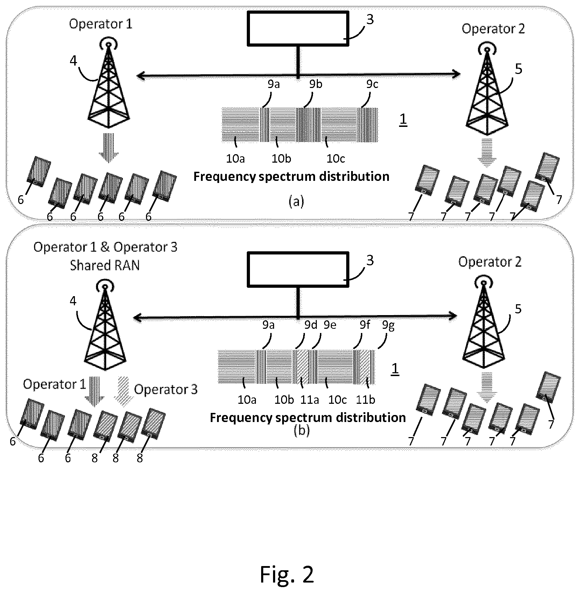

Figs. 2a and 2b, respectively, show a first and a second embodiment of the present invention in general overviews.

Fig. 2a visualizes a frequency spectrum 1 which consists of a plurality of subcarriers which are divided in or allocated to respectively adjacent fragments 9a, 9b, 9c, 10a, 10b and 10c. The frequency spectrum 1 is contiguous. A subset or part of the fragments, i.e. the fragments 9a, 9b and 9c are allocated to a first operator 1 and the other part or subset of the fragments 10a, 10b and 10c is allocated to a second operator 2 as visualized in Fig. 2a. The number of subcarriers in each of the fragments is flexible and can be adapted to respective circumstances, whereby each fragment comprises at least one frequency subcarrier.

In the embodiment shown in Fig. 2a, the first operator 1 operates a first base station 4 and a second operator 2 operates a second base station 5. As generally explained in relation to the present invention in the above summary of the present invention, however, more base stations and/or more operators operating these base stations could be present in the system. The first operator 1 has allocated subscribers or users with respective terminals 6. The first base station 4 hereby is adapted to communicate with the terminals 6 on the basis of and in the subcarriers of the fragments 9a, 9b and 9c allocated to the first operator 1 operating the first base station 4. Similarly, the second operator 2 has allocated users or subscribers with terminals 7. The second base station 5 operated by the second operator 2 is hereby adapted to communicate with these terminals 7 on the basis of and in the subcarriers of the fragments 10a, 10b and 10c allocated to the second operator 2. Hereby, each of the operators, i.e. the shown examples of the first operator 1 and the second operator 2, can flexibly adapt the signal characteristic, e.g. the signal structure, and subsets or parts of its resources, i.e. of its allocated fragments for the communication with respective terminals 6, 7, as will be explained further below.

The general frequency spectrum distribution, i.e. the subcarrier distribution of the frequency spectrum 1 to the first operator 1 and the second operator 2 is determined by a central control unit 3 which is connected to or part of the base stations 4, 5. The central control means 3 determines the subcarrier distribution, which is an allocation of fragments of the frequency spectrum 1 to the first operator 1 and the second operator 2. Each fragment 9a, 9b, 9c, 10a, 10b, 10c comprises at least one subcarrier and is only allocated to one of the first and second operator, but not to the other one of the first and second operator. In other words, a subcarrier allocated to the first operator 1 and one of the fragments 9a, 9b, 9c cannot be allocated to the second operator 2 at the same time.

Fig. 2b shows a second embodiment of the present invention, which is in fact a variation of the first embodiment shown in and described in relation to Fig. 2a. Generally, all statements and descriptions made in relation to the embodiment shown in Fig. 2a also are valid for the embodiment shown in Fig. 2b, whereby same elements are described with the same reference numbers and have the same functionalities as described in Fig. 2a. The difference between the embodiments of Figs. 2a and 2b is that in the second embodiment of Fig. 2b, the first base station 4 is operated by and shared by the first operator 1 and a third operator 3, which could even share the same radio access network, RAN. Hereby, by means of the first base station 4, a first operator 1 allows his subscribers or users to communicate, via their terminals 6, in the fragments 9a, 9d, 9e, 9f and 9g of the frequency spectrum 1 allocated to the first operator 1. The third operator 3 enables its users or subscribers, via their terminals 8, to communicate in the wireless multi carrier communication system in the fragments 11a and 11b of the frequency spectrum 1 allocated to the third operator 3. Thus, in the embodiment of Fig. 2b, the central control means 3 determines a frequency spectrum distribution or subcarrier distribution of the subcarriers of the frequency spectrum 1 to the first operator 1, the second operator 2 and the third operator 3 in such a way that each of the operators has respectively allocated fragments of the spectrum. The first operator 1 has the allocated fragments 9a, 9d, 9e, 9f and 9g. The second operator 2 has the allocated fragments 10a, 10b and 10c. The third operator 3 has the allocated fragments 11a and 11b. One subcarrier allocated in one of the fragments to one of the operators is not at the same time allocated to another operator.

As mentioned above, the first operator 1 and the third operator 3 may share the same radio access network, RAN. When sharing the RAN, the base station functionalities of the first operator 1 and the third operator 3 share the site as well as the base station hardware which is visualized as sharing the first base station 4 in Fig. 2b. The base station hardware can be shared either partially, for example only the antenna and/or certain processing units, or completely, for example in the case of virtual mobile operators. Sharing the RAN implies that the base station functionalities of the first operator 1 and the third operator 3 can achieve perfect frequency synchronization with each other. Perfect frequency synchronization means that different operators can exactly align their signal waveforms in frequency domain in a way that without any mutual guardband, they have no mutual interference or very low mutual interference in the communication with the respective terminals.

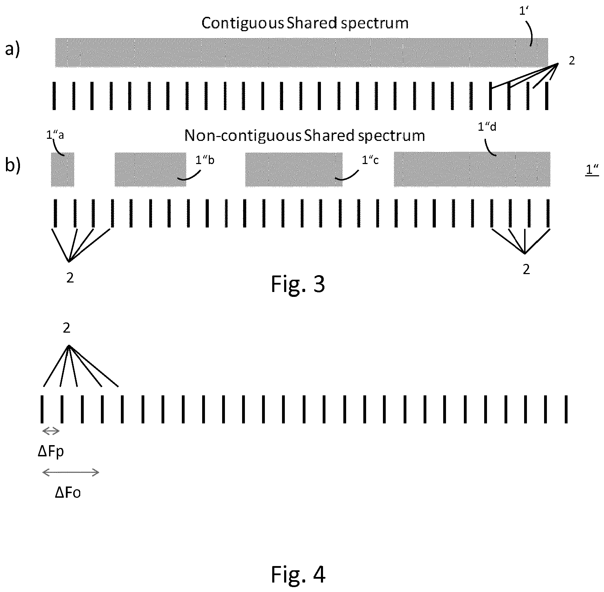

In the embodiments shown in Figs. 2a and 2b, the frequency resources of the frequency spectrum 1 are contiguous, i.e. the entire frequency spectrum 1 with all its subcarriers is available to be distributed and allocated to the operators. This situation is visualized in Fig. 3a, in which all subcarriers 2 of the frequency spectrum 1' are allocated to and shared by the operators. In an alternative implementation in Fig. 3b, only certain parts of the frequency spectrum 1" are shared. In other words, the frequency spectrum 1" to be shared is non-contiguous. In this case, for example, only certain not adjacent parts 1"a, 1"b, 1"c and 1"d with their respective subcarriers 2 are available to allocate it to the operators. The other non-available parts of the frequency spectrum 1" may for example be reserved for other communication systems, public service, emergency situations or the like.

As mentioned, each operator is only allowed to transmit signals on the subcarriers on the fragments which are allocated to it. Hereby, the spacing between the subcarriers ΔFp as visualized in Fig. 4 can be adaptive, i.e. maybe flexibly set by each operator. Hereby, the subcarrier spacing used by each operator must be an integer multiple of a minimum basic subcarrier spacing ΔFp of the subcarriers 2 in the frequency spectrum 1. Thus, the subcarrier spacing flexibly used and set by each operator is ΔFo, whereby ΔFo = m ΔFp, wherein m is an integer. The resulting fragment size allocated to the operators would then be n ΔFo = nm ΔFp, wherein n is also an integer.

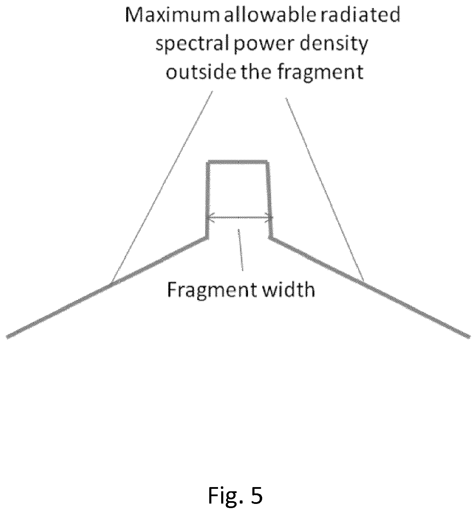

According to the present invention, the central control means 3 forwards a radiation mask, which comprises information allowing the first base station 4 and the second base station 5 as shown in Figs. 2a and 2b to reduce the interference between different operators to which adjacent fragments are allocated to the first base station 4 and the second base station 5. This forwarding of the radiation mask by the central control means 3 is performed depending on the quality of the frequency synchronization between the different operators to which adjacent fragments are allocated. This radiation mask can for example be predefined and stored in the central control means 3, or can be determined by the central control means 3 on the basis of the information received from one or more of the operators. The information in the radiation mask hereby may comprise parameters related to the power density outside of an allocated fragment. The parameter hereby may define the maximum allowable spectral power density outside of each allocated fragment of an operator, i.e. the maximum allowable transmitted power density at each frequency outside the allocated fragment, which is for example visualized in Fig. 5. In this case, the parameter could be given in a value pair, the first value defining the frequency distance to the edge of the fragment and the second value defining the maximum allowable power density. Alternatively, the parameter may define the relative power density outside the fragment with regard to average power density inside the fragment. For example, if, inside an allocated fragment, the average transmitted spectral power density is P0 [dBm/Hz], for a certain frequency distance to the edge of the fragment, the power density should not be larger than P0 - X [dBm/Hz]. This X could be the value of the parameter.

The determining and forwarding of the radiation mask by the central control means 3 depends on the quality of the frequency synchronization between different operators to which adjacent fragments are allocated. In case that the central control means 3 determines or obtains information that two different operators having adjacent fragments are perfectly synchronized, for example if they share a common RAN, it is not necessary to forward a radiation mask to these operators. On the other hand, if a value reflecting the quality of the frequency synchronization between different operators to which adjacent fragments are allocated is smaller or below a certain threshold value, the radiation mask is established and forwarded to the base stations of these operators. Even if the different operators with adjacent fragments do not have perfect synchronization, but if at least the value reflecting the quality of the frequency synchronization between the different operators to which adjacent fragments are allocated is above or larger than the threshold, the radiation may also not be established and forwarded.

In an advantageous but optional implementation, the frequency resources, i.e. the subcarriers of the frequency spectrum 1 are allocated to the operators in a medium or long-term duration. Hereby, each of the operators may send necessary information, depending on a mutual agreement or a standardized sharing framework, such as traffic demand, favorite subcarriers in the frequency spectrum or channel quality information and the wanted minimum fragment size to the central control means 3. After gathering such information, the central control means 3 partitions and allocates the shared frequency spectrum 1 into a number of fragments as mentioned and allocates these fragments to the operators. The partitioning and allocating of the fragments is performed according to the size and shape of the shared frequency spectrum 1, the requirements of the operators as well as the agreed and/or standardized sharing rules. It is to be noted that the central control means 3 can either be a real physically separate central unit or a virtual one, i.e. consist of distributed functional control elements which are for example implemented in each of the base stations. The gathering of the information from the operators would in this case be implemented by exchanging information between the base stations allocated to these operators. The spectrum fragmentation and fragment allocation is done for example periodically in a medium term, which could for example be 500 ms or in a long-term, for example more than 1 s. But if the inter-operator backhaul capacity or the capacity between the connections of the operators and the central control means 3 is high, such fragmentation and allocation can be done within even shorter periods, for example 10 ms. After the spectrum partitioning and fragment allocation, the central control means 3 sends to each operator the information about the allocated fragment(s), for example in form of starting and ending subcarrier indexes of each fragment. Alternatively, the central control means 3 can broadcast the whole frequency distribution, i.e. spectrum fragment allocation map, to all operators, for example in form of the starting and ending subcarrier indexes of each fragment plus the respective operator to which the fragment is allocated to. Either at the same time when sending the subcarrier distribution to the base stations, or at a different timepoint, the central control means 3 sends the radiation masks to the base stations.

In a second stage of this two-stage spectrum allocation procedure, an operator resource allocation is performed by each operator to the respectively allocated terminals 6, 7, 8 of the operator in a short term duration. From the allocated frequency spectrum fragments, each operator allocates the frequency resources in form of the subcarriers 2 in its allocated fragments to its users in terms of a certain number of subcarriers 2. There are then two options for such a resource allocation. The first option is a non-cooperative option, where the resource allocation of different operators is done independently. The second one is a cooperative option, where the operators perform the resource allocation with a certain degree of cooperation, for example, exchange of weak user information and allocation in order to further reduce inter-operator interference.

As mentioned, the central control means 3 determines the total amount of the frequency spectrum to be allocated for each operator according to predefined rules and/or current parameters, like traffic demand of each operator and so forth. An example of such predefined rules could be that the allocated spectrum amount of each operator scales with each traffic demand under fairness constraints. Afterwards, the central control means 3 partitions and allocates the shared spectrum into fragments. Each fragment will only be allocated to one operator at one timepoint, but not to a different operator. In this allocation procedure, both the fragment size and the distribution of the fragments for each operator can be adjusted adaptively which will be explained in more detail in the following. Generally, the larger the fragments, the less the mutual interference between the operators, i.e. less guard band between the fragments is required. In contrast, the smaller the fragments, the more evenly the fragments of an operator can be distributed over the frequency spectrum, and thus the higher the frequency diversity. Also, the smaller the fragments, the more efficient the exploitation of non-contiguous shared frequency spectrums, and the more operators can share even small fragmented spectrums. Therefore, in the first stage, each operator can claim a minimum fragment size (this information is sent to the central control means 3), so that inter-operator interference is below a certain level and the required guard bands can be below certain size. Afterwards, the central control means 3 adjusts the actual size of the fragments in order to meet the minimum fragment size requirements as good as possible, on the one hand, and to exploit frequency diversity, non-contiguous spectrum and small available portions of the spectrum (for example due to larger operator number) on the other hand. The central control means 3 also adapts the distribution of the frequency spectrum fragments for each operator, for example according to the information about wanted or favorable subcarriers 2, or channel quality information which is provided by the operators, as well as some fairness constraints. Such adaption can achieve a tradeoff between frequency diversity, multi-user diversity, interference reduction, non-contiguous band exploitation, complexity and so forth.

Each operator can adjust its guard bands at the edges of the allocated spectrum fragments. Hereby, each base station 4, 4', 5, upon receiving the mentioned radiation mask, determines guard bands at the edges of allocated fragments in relation to said information regarding the reduction of interference between the different operators to which adjacent fragments are allocated. This serves the protection of other operators on the one hand as well as the protection of the respective users and subscribers allocated to this operator on the other hand. The guard band adaption (or guard band adjustment) can be done in two stages. In the first stage, after the above-mentioned medium or long-term inter-operator spectrum allocation is done, each operator adapts the guard band at the edges of each fragment to meet the requirements of the radiation mask received from the central control means 3. In the second stage, during the short time per-operator resource allocation for the users, each operator can further deactivate subcarriers 2 at the edges of spectrum fragments to increase the guard band, if necessary. An example is that in some cases, by increasing the guard band, better protection of the users with weak received signals can be achieved.

As mentioned before, some of the operators, i.e. the terminals allocated to these operators as well as the relevant base station functionalities, may have RAN sharing. Also, some operators may have perfect frequency synchronization with each other even without sharing a RAN. In both cases, the following implementation can be used. The different operators sharing a RAN (such as for example the first operator 1 and the third operator 3 in Figs. 2a and 2b), and/or having perfect frequency synchronization with each other join the frequency spectrum sharing procedure independently. Each operator performs the spectrum sharing procedure as described above, with the following additional operations. An operator or a respective functional unit of a base station allocated to an operator sends to the central control means 3 information about the identities of operators sharing the same RAN and/or having perfect synchronization. After the spectrum fragmentation and allocation, the central control means 3 checks if immediately adjacent fragments are allocated to different operators sharing one RAN and/or having perfect frequency synchronization. If yes, no guard band has to be reserved between such fragments and correspondingly, no mask has to be established. This is done when the central control means 3 sends the subcarrier distribution 1 with the fragment allocation information to the operators. Alternatively, if the central control means 3 sends the whole subcarrier distribution 1 to all operators, for example in a broadcast, each operator can check whether the immediately adjacent fragment is used by another operator sharing the same RAN and/or having perfect frequency synchronization and then decide whether to reserve guard band accordingly.

For operators sharing a RAN, there is an alternative option. In this option, the base which is shared by at least two operators collects the information from all operators sharing one common RAN, accumulates such information and then sends it to the central control means 3. After the central control means 3 has sent the frequency distribution 1 to this base station 4, 4', 5, the base station 4, 4', 5 allocates the resources of the allocated fragments to different operators sharing the RAN. Afterwards, these operators adjust their signal structure, wave forms and guard bands and allocate their resources to their users. This is done by the operators either separately or jointly.

The radiation mask forwarded by the central control means 3 to the base stations 4, 4', 5 can be sent to each base station 4, 4', 5 of operators to which adjacent fragments are allocated, or only to one base station 4, 4', 5, but not to the other one. In this case only one of the base stations 4, 4', 5 takes the necessary measures to avoid interference with the other base station 4, 4', 5, i.e. operator. Generally, after receiving the radiation mask from the central control means 3, each operator adapts the signal characteristic, e.g. the signal structure, of the signal communicated to its terminals in the allocated fragments in relation to and depending on the information regarding the reduction of interference between the different operators to which adjacent fragments are allocated. Information on the parameters contained in the radiation mask was explained in more detail above. For example, each operator may adapt the subcarrier spacing in the allocating fragments as mentioned above as an integer multiple of the minimum subcarrier spacing in the frequency spectrum 1. Alternatively or additionally, each operator may adapt the power spectrum of the signal communicated in the respectively allocated fragments. The adaption of the power spectrum could be jointly optimized with the subcarrier spacing. An example for adaption of the power spectrum is adaption of the specific pulse shape. Further alternatively or additionally, each operator may adapt the signal frames to be communicated in the respectively allocated fragments, for example by adapting the size and timing of the signal frames, since the signal frame structure of different operators do not have to be aligned in time. This provides the operators a high degree of freedom to adjust its own signal frames independently of other operators.

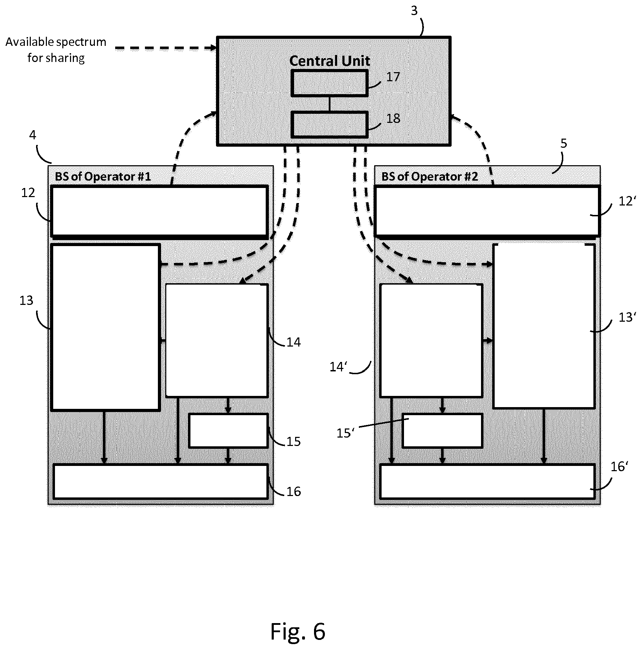

Fig. 6 shows an example of a more specific implementation of the functionalities of a central control means 3 and the first base station 4 and the second base station 5, the example being shown and explained in relation to Figs. 2a and 2b as well as the other figures. In the example shown in Fig. 6, the central control means 3 is shown as a central unit which is physically separate from the first base station 4 and the second base station 5. The central control means 3 hereby comprises a determining means 17 which is adapted to determine the subcarrier distribution, i.e. the allocation of fragments of the available frequency spectrum 1 to the first operator 1 and the second operator 2. The functionalities of the determining means 17 hereby includes some of or all of the potential functionalities explained above in relation to the determination of the subcarrier distribution. The central control means 3 further comprises a forwarding means 18 which is connected to the determining means 17. The forwarding means 18 is adapted to forward the subcarrier distribution 1 determined by the determining means 17 as well as the discussed radiation mask to the first base station 4 and the second base station 5. The forwarding of the radiation mask by the forwarding means 18 is performed depending on the frequency synchronization between the different operators to which adjacent fragments are allocated, as explained in more detail further above. Hereby, the central control means 3 may optionally comprise an additional deciding means or unit, adapted to decide if a radiation mask should be forwarded or not in line with the conditions and requirements explained in further detail above. As shown in the example of Fig. 6, the first base station 4 comprises a first functional unit 12, a second functional unit 13 as well as a third functional unit 14. The first functional unit 12 is adapted to send required information from the first base station 4 to the central control means 3. Such information may include traffic demand, favorite subcarriers, minimum fragment size and/or other required or possible information. The central control means 3, more specifically the determining means 17, may then use such information for the allocation of the fragments in establishing the subcarrier distribution. The second functional unit 13 is configured, upon receiving the radiation mask from the central control means 3, to adapt subcarrier spacing, to activate/deactivate subcarriers, to adapt wave form for objected guard bands and/or other potential adaptations in order to meet preset requirements or the requirements of the radiation mask received from the central control means 3. The third functional unit 14 is adapted to perform the resource scheduling for users allocated to the first base station 4 and/or to further guard band adjustments in the allocated fragments as well as other functionalities as required. The first base station further comprises a unit 16 adapted to establish the physical layer wave form on the basis of the respective information and adaptations received from the second functional unit 13 and the third functioning unit 14 as well as incorporating the user content 15 for the respective user or end terminal 6.

The second base station 5 comprises identical functional elements and units as explained in relation to the first base station 4, namely, a first functional unit 12', the functionalities of which corresponding to the functionalities of the first functional unit 12 of the first base station, a second functional unit 13', the functionalities of which corresponding to the functionalities of the second functional unit 13, and a third functional unit 14', the functionalities of which corresponding to the functionalities of the third functional unit 14. The second base station 5 further comprises a unit 16' adapted to establish the physical layer signal in the same way as the unit 16 of the first base station 4 on the basis of respective content 15'. The first base station 4 and the second base station 5 further comprise the respective and necessary means for transmitting the physical layer signal to the terminal 6 and 7, respectively, as well as respective functional elements to receive and process signals received from the terminal 6 and 7, respectively, in the usual manner.

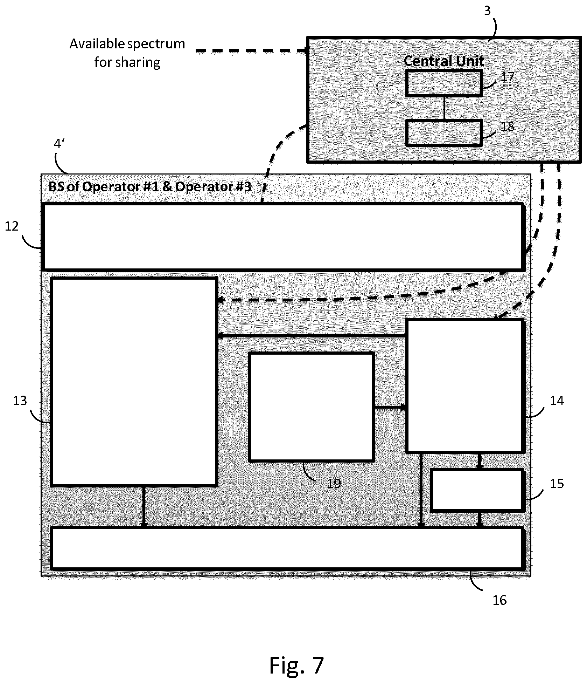

Fig. 7 shows a further more specific implementation example of the central control means 3 and the first base station 4', which is operated by a first operator 1 and the third operator 3 as explained in relation to Fig. 2b and the other figures. In this case, the central control means 3 comprises the same functional units as shown and explained in relation to the central control means 3 in Fig. 6, namely, the determining means 17 and the forwarding means 18. Further, the base station 4' comprises the same functional units as shown and explained in relation to the first base station 4 in Fig. 6, namely, the first functional unit 12, the second functional unit 13, the third functional unit 14, as well as the functional unit 16 for establishing a physical layer signal on the basis of the user data 15. In addition hereto, the base station 4' may comprise a fourth functional unit 19 adapted for resource allocation between the first operator 1 and the third operator 3 in case that the first operator 1 and the third operator 3 share the same RAN. The fourth functional unit 19 hereby forwards the corresponding visual allocation information between the first operator 1 and the third operator 3 to the third functional unit 14 which correspondingly schedules the resources for the various terminals 6 and 8 of the first operator 1 and the third operator 3.

The scope of the invention is solely limited by the appended claims.

## Claims

1. Method for allocating subcarriers of a frequency spectrum (1) to operators in a wireless multi carrier communication system, which comprises a central control means (3) and at least two base stations (4, 4', 5) for wireless communication with terminals (6, 7, 8) in said wireless multi carrier communication system, said at least two base stations (4, 4', 5) being operated by at least two operators, comprising the steps of
determining, by said central control means (3), a subcarrier distribution, said subcarrier distribution being an allocation of fragments of said frequency spectrum (1) to said at least two operators, wherein a fragment comprises at least one subcarrier and is only allocated to one of said at least two operators, but not to another one of said at least two operators,
forwarding, by said central control means (3), said subcarrier distribution to said at least two base stations, and
forwarding, by said central control means (3), a radiation mask which comprises information allowing base stations (4, 4', 5) to reduce interference between different operators to which adjacent fragments are allocated to said at least two base stations (4, 4', 5), depending on the frequency synchronization between the different operators to which adjacent fragments are allocated;
**characterized in that** said radiation mask is determined on the basis of information about the frequency synchronization between the different operators to which adjacent fragments are allocated;
wherein if it is determined that a value reflecting the quality of the frequency synchronization between the different operators to which adjacent fragments are allocated is larger than a threshold, a radiation mask is not established.

2. Method according to claim 1,
wherein said information in said radiation mask comprises a parameter related to the power density outside of an allocated fragment.

3. Method according to claim 1 or 2,
wherein said radiation mask is predefined and stored in said central control means (3).

4. Method according to claim 1, 2 or 3,
wherein said radiation mask is determined by said central control means (3) on the basis of information received from said at least two operators.

5. Method according to one of the claims 1 to 4,
wherein, each of said at least two base stations (4, 4', 5), upon receiving said radiation mask, adapts the signal characteristic regarding the allocated fragments in relation to said information regarding the reduction of interference between the different operators to which adjacent fragments are allocated.

6. Method according to one of the claims 1 to 5,
wherein, each of said at least two base stations (4, 4', 5), upon receiving said radiation mask, adapts the subcarrier spacing in the allocated fragments in relation to said information regarding the reduction of interference between the different operators to which adjacent fragments are allocated.

7. Method according to one of the claims 1 to 6,
wherein, each of said at least two base stations (4, 4', 5), upon receiving said radiation mask, adapts the power spectrum of the signal resulting from the allocated fragments in relation to said information regarding the reduction of interference between the different operators to which adjacent fragments are allocated.

8. Method according to one of the claims 1 to 7,
wherein, each of said at least two base stations (4, 4', 5), upon receiving said radiation mask, adapts signal frames of the signal resulting from the allocated fragments in relation to said information regarding the reduction of interference between the different operators to which adjacent fragments are allocated.

9. Method according to one of the claims 1 to 8,
wherein, each of said at least two base stations (4, 4', 5), upon receiving said radiation mask, determines guard bands at the edges of allocated fragments in relation to said information regarding the reduction of interference between the different operators to which adjacent fragments are allocated.

10. Control means (3) for allocating subcarriers of a frequency spectrum to operators in a wireless multi carrier communication system, said control means (3) being adapted to control at least two base stations (4, 4', 5) for wireless communication with terminals (6, 7, 8) in said wireless multi carrier communication system, said at least two base stations (4, 4', 5) being operated by at least two operators, said control means (3) comprising
determining means (17) adapted to determine a subcarrier distribution, said subcarrier distribution being an allocation of fragments of said frequency spectrum to said at least two operators, wherein a fragment comprises at least one subcarrier and is only allocated to one of said at least two operators, but not to another one of said at least two operators, and
forwarding means (18) adapted to forward said subcarrier distribution and a radiation mask which comprises information allowing base stations (4, 4', 5) to reduce interference between different operators to which adjacent fragments are allocated to said at least two base stations (4, 4', 5), depending on the frequency synchronization between the different operators to which adjacent fragments are allocated; **characterized in that** said radiation mask is determined on the basis of information about the frequency synchronization between the different operators to which adjacent fragments are allocated;
wherein if it is determined that a value reflecting the quality of the frequency synchronization between the different operators to which adjacent fragments are allocated is larger than a threshold, a radiation mask is not established.

11. Control means (3) according to claim 10,
wherein said control means (3) is a control unit which is physically separate from said at least two base stations (4, 4', 5).

12. Control means (3) according to claim 10,
wherein said control means (3) comprises distributed functional control elements which are respectively part of said at least two base stations (4, 4', 5).

13. Base station (4, 4', 5) for wireless communication with terminals in a wireless multi carrier communication system which comprises a central control means (3) according to any of claims 10 to 12 and at least two base stations (4, 4', 5) for wireless communication with terminals (6, 7, 8) in said wireless multi carrier communication system, said at least two base stations (4, 4', 5) being operated by at least two operators, comprising
receiving means (13) adapted to receive, from said central control means (3), a subcarrier distribution, said subcarrier distribution being an allocation of fragments of said frequency spectrum to said at least two operators, wherein a fragment comprises at least one subcarrier and is only allocated to one of said at least two operators, but not to another one of said at least two operators, and a radiation mask which comprises information allowing the base stations (4, 4', 5) to reduce interference between different operators to which adjacent fragments are allocated;
**characterized in that** said radiation mask is determined on the basis of information about the frequency synchronization between the different operators to which adjacent fragments are allocated;
wherein if it is determined that a value reflecting the quality of the frequency synchronization between the different operators to which adjacent fragments are allocated is larger than a threshold, a radiation mask is not established.

## Patentansprüche

1. Verfahren zum Zuteilen von Unterträgern eines Frequenzspektrums (1) zu Betreibern in einem drahtlosen Mehrträgerkommunikationssystem, das ein zentrales Steuermittel (3) und mindestens zwei Basisstationen (4, 4', 5) für die drahtlose Kommunikation mit Endgeräten (6, 7, 8) im drahtlosen Mehrträgerkommunikationssystem umfasst, wobei die mindestens zwei Basisstationen (4, 4', 5) von mindestens zwei Betreibern betrieben werden, das die folgenden Schritte umfasst
Bestimmen einer Unterträgerverteilung durch das zentrale Steuermittel (3), wobei die Unterträgerverteilung eine Zuteilung von Fragmenten des Frequenzspektrums (1) zu mindestens zwei Betreibern ist, wobei ein Fragment mindestens einen Unterträger umfasst und nur einem der mindestens zwei Betreiber, nicht aber einem anderen der mindestens zwei Betreiber zugeteilt wird,
Weiterleiten der Unterträgerverteilung durch das zentrale Steuermittel (3) zu den mindestens zwei Basisstationen und
Weiterleiten einer Strahlungsmaske, die Informationen umfasst, die es Basisstationen (4, 4', 5) erlaubt, Interferenzen zwischen verschiedenen Betreibern, denen benachbarte Fragmente zugeteilt sind, zu reduzieren, durch das zentrale Steuermittel (3) zu den mindestens zwei Basisstationen (4, 4', 5) in Abhängigkeit von der Frequenzsynchronisation zwischen den verschiedenen Betreibern, denen benachbarte Fragmente zugeteilt sind;
**dadurch gekennzeichnet, dass** die Strahlungsmaske auf Basis von Informationen über die Frequenzsynchronisation zwischen den verschiedenen Betreibern, denen benachbarte Fragmente zugeteilt sind, bestimmt wird;
wobei, wenn bestimmt wird, dass ein Wert, der die Qualität der Frequenzsynchronisation zwischen den verschiedenen Betreibern, denen benachbarte Fragmente zugeteilt sind, reflektiert, größer ist als ein Schwellwert, keine Strahlungsmaske eingerichtet wird.

2. Verfahren nach Anspruch 1,
wobei die Informationen in der Strahlungsmaske einen Parameter umfassen, der die Leistungsdichte außerhalb eines zugeteilten Fragments betrifft.

3. Verfahren nach Anspruch 1 oder 2,
wobei die Strahlungsmaske vordefiniert und im zentralen Steuermittel (3) gespeichert ist.

4. Verfahren nach Anspruch 1, 2 oder 3,
wobei die Strahlungsmaske vom zentralen Steuermittel (3) auf Basis von Informationen, die von den mindestens zwei Betreibern empfangen werden, bestimmt wird.

5. Verfahren nach einem der Ansprüche 1 bis 4,
wobei jede der mindestens zwei Basisstationen (4, 4', 5) nach Empfangen der Strahlungsmaske die Signalcharakteristik hinsichtlich der zugeteilten Fragmente mit Bezug auf die Informationen, die die Reduzierung von Interferenzen zwischen verschiedenen Betreibern betreffen, denen benachbarte Fragmente zugeteilt sind, anpasst.

6. Verfahren nach einem der Ansprüche 1 bis 5,
wobei jede der mindestens zwei Basisstationen (4, 4', 5) nach Empfangen der Strahlungsmaske den Unterträgerabstand in den zugeteilten Fragmenten mit Bezug auf die Informationen, die die Reduzierung von Interferenzen zwischen verschiedenen Betreibern betreffen, denen benachbarte Fragmente zugeteilt sind, anpasst.

7. Verfahren nach einem der Ansprüche 1 bis 6,
wobei jede der mindestens zwei Basisstationen (4, 4', 5) nach Empfangen der Strahlungsmaske das Leistungsspektrum des Signals, das aus den zugeteilten Fragmenten resultiert, mit Bezug auf die Informationen, die die Reduzierung von Interferenzen zwischen verschiedenen Betreibern betreffen, denen benachbarte Fragmente zugeteilt sind, anpasst.

8. Verfahren nach einem der Ansprüche 1 bis 7,
wobei jede der mindestens zwei Basisstationen (4, 4', 5) nach Empfangen der Strahlungsmaske Signalrahmen des Signals, die aus den zugeteilten Fragmenten resultieren, mit Bezug auf die Informationen, die die Reduzierung von Interferenzen zwischen verschiedenen Betreibern betreffen, denen benachbarte Fragmente zugeteilt sind, anpasst.

9. Verfahren nach einem der Ansprüche 1 bis 8,
wobei jede der mindestens zwei Basisstationen (4, 4', 5) nach Empfangen der Strahlungsmaske Schutzbänder an den Kanten von zugeteilten Fragmenten mit Bezug auf die Informationen, die die Reduzierung von Interferenzen zwischen verschiedenen Betreibern betreffen, denen benachbarte Fragmente zugeteilt sind, bestimmt.

10. Steuermittel (3) zum Zuteilen von Unterträgern eines Frequenzspektrums zu Betreibern in einem drahtlosen Mehrträgerkommunikationssystem, wobei das zentrale Steuermittel (3) angepasst ist, mindestens zwei Basisstationen (4, 4', 5) für die drahtlose Kommunikation mit Endgeräten (6, 7, 8) im drahtlosen Mehrträgerkommunikationssystem zu steuern, wobei die mindestens zwei Basisstationen (4, 4', 5) von mindestens zwei Betreibern betrieben werden, wobei das Steuermittel (3) Folgendes umfasst
ein Bestimmungsmittel (17), das angepasst ist, eine Unterträgerverteilung zu bestimmen, wobei die Unterträgerverteilung eine Zuteilung von Fragmenten des Frequenzspektrums zu mindestens zwei Betreibern ist, wobei ein Fragment mindestens einen Unterträger umfasst und nur einem der mindestens zwei Betreiber, nicht aber einem anderen der mindestens zwei Betreiber zugeteilt wird, und
ein Weiterleitungsmittel (18), das angepasst ist, die Unterträgerverteilung und eine Strahlungsmaske, die Informationen umfasst, die es Basisstationen (4, 4', 5) erlaubt, Interferenzen zwischen verschiedenen Betreibern, denen benachbarte Fragmente zugeteilt sind, zu reduzieren, in Abhängigkeit von der Frequenzsynchronisation zwischen den verschiedenen Betreibern, denen benachbarte Fragmente zugeteilt sind, zu den mindestens zwei Basisstationen (4, 4', 5) weiterzuleiten;
**dadurch gekennzeichnet, dass** die Strahlungsmaske auf Basis von Informationen über die Frequenzsynchronisation zwischen den verschiedenen Betreibern, denen benachbarte Fragmente zugeteilt sind, bestimmt wird;
wobei, wenn bestimmt wird, dass ein Wert, der die Qualität der Frequenzsynchronisation zwischen den verschiedenen Betreibern, denen benachbarte Fragmente zugeteilt sind, reflektiert, größer ist als ein Schwellwert, keine Strahlungsmaske eingerichtet wird.

11. Steuermittel (3) nach Anspruch 10,
wobei das Steuermittel (3) eine Steuereinheit ist, die von den mindestens zwei Basisstationen (4, 4', 5) physisch getrennt ist.

12. Steuermittel (3) nach Anspruch 10,
wobei das Steuermittel (3) verteilte Funktionssteuerelemente umfasst, die jeweils Teil der mindestens zwei Basisstationen (4, 4', 5) sind.

13. Basisstation (4, 4', 5) für eine drahtlose Kommunikation mit Endgeräten in einem drahtlosen Mehrträgerkommunikationssystem, das ein zentrales Steuermittel (3) nach einem der Ansprüche 10 bis 12 und mindestens zwei Basisstationen (4, 4', 5) für die drahtlose Kommunikation mit Endgeräten (6, 7, 8) im drahtlosen Mehrträgerkommunikationssystem umfasst, wobei die mindestens zwei Basisstationen (4, 4', 5) von mindestens zwei Betreibern betrieben werden, die Folgendes umfasst
ein Empfangsmittel (13), das angepasst ist, eine Unterträgerverteilung, wobei die Unterträgerverteilung eine Zuteilung von Fragmenten des Frequenzspektrums zu mindestens zwei Betreibern ist, wobei ein Fragment mindestens einen Unterträger umfasst und nur einem der mindestens zwei Betreiber, nicht aber einem anderen der mindestens zwei Betreiber zugeteilt wird, und eine Strahlungsmaske, die Informationen umfasst, die es den Basisstationen (4, 4', 5) erlauben, Interferenzen zwischen verschiedenen Betreibern, denen benachbarte Fragmente zugeteilt sind, zu reduzieren, vom zentralen Steuermittel (3) zu empfangen;
**dadurch gekennzeichnet, dass** die Strahlungsmaske auf Basis von Informationen über die Frequenzsynchronisation zwischen den verschiedenen Betreibern, denen benachbarte Fragmente zugeteilt sind, bestimmt wird;
wobei, wenn bestimmt wird, dass ein Wert, der die Qualität der Frequenzsynchronisation zwischen den verschiedenen Betreibern, denen benachbarte Fragmente zugeteilt sind, reflektiert, größer ist als ein Schwellwert, keine Strahlungsmaske eingerichtet wird.

## Revendications

1. Procédé d'affectation de sous-porteuses d'un spectre de fréquences (1) à des opérateurs dans un système de communication sans fil à multiples porteuses, qui comprend un moyen de contrôle central (3) et au moins deux stations de base (4, 4', 5) pour une communication sans fil avec des terminaux (6, 7, 8) dans ledit système de communication sans fil à multiples porteuses, lesdites au moins deux stations de base (4, 4', 5) étant opérées par au moins deux opérateurs, le procédé comprenant les étapes consistant à :
déterminer, par ledit moyen de contrôle central (3), une distribution de sous-porteuses, ladite distribution de sous-porteuses étant une affectation de fragments dudit spectre de fréquences (1) auxdits au moins deux opérateurs, un fragment comprenant au moins une sous-porteuse et étant affecté uniquement à un desdits au moins deux opérateurs, mais pas à un autre desdits au moins deux opérateurs,
transférer, par ledit moyen de contrôle central (3), ladite distribution de sous-porteuses auxdites au moins deux stations de base, et
transférer, par ledit moyen de contrôle central (3) auxdites au moins deux stations de base (4, 4', 5), un masque de rayonnement qui comprend des informations permettant à des stations de base (4, 4', 5) de réduire un brouillage entre différents opérateurs auxquels des fragments adjacents sont affectés, selon la synchronisation de fréquences entre les différents opérateurs auxquels des fragments adjacents sont affectés ;
le procédé étant **caractérisé en ce que** ledit masque de rayonnement est déterminé sur la base d'informations sur la synchronisation de fréquences entre les différents opérateurs auxquels des fragments adjacents sont affectés ;
un masque de rayonnement n'étant pas établi s'il est déterminé qu'une valeur reflétant la qualité de la synchronisation de fréquences entre les différents opérateurs auxquels des fragments adjacents sont affectés est supérieure à un seuil.

2. Procédé selon la revendication 1,
dans lequel lesdites informations dans ledit masque de rayonnement comprennent un paramètre relatif à la densité de puissance à l'extérieur d'un fragment affecté.

3. Procédé selon la revendication 1 ou 2,
dans lequel ledit masque de rayonnement est prédéfini et stocké dans ledit moyen de contrôle central (3).

4. Procédé selon la revendication 1, 2 ou 3,
dans lequel ledit masque de rayonnement est déterminé par ledit moyen de contrôle central (3) sur la base d'informations reçues en provenance desdits au moins deux opérateurs.

5. Procédé selon l'une des revendications 1 à 4,
dans lequel chacune desdites au moins deux stations de base (4, 4', 5), au moment de recevoir ledit masque de rayonnement, adapte la caractéristique de signal concernant les fragments affectés par rapport auxdites informations concernant la réduction d'un brouillage entre les différents opérateurs auxquels des fragments adjacents sont affectés.

6. Procédé selon l'une des revendications 1 à 5,
dans lequel chacune desdites au moins deux stations de base (4, 4', 5), au moment de recevoir ledit masque de rayonnement, adapte l'espacement de sous-porteuses dans les fragments affectés par rapport auxdites informations concernant la réduction d'un brouillage entre les différents opérateurs auxquels des fragments adjacents sont affectés.

7. Procédé selon l'une des revendications 1 à 6,
dans lequel chacune desdites au moins deux stations de base (4, 4', 5), au moment de recevoir ledit masque de rayonnement, adapte le spectre de puissance du signal résultant des fragments affectés par rapport auxdites informations concernant la réduction d'un brouillage entre les différents opérateurs auxquels des fragments adjacents sont affectés.

8. Procédé selon l'une des revendications 1 à 7,
dans lequel chacune desdites au moins deux stations de base (4, 4', 5), au moment de recevoir ledit masque de rayonnement, adapte les trames de signal du signal résultant des fragments affectés par rapport auxdites informations concernant la réduction d'un brouillage entre les différents opérateurs auxquels des fragments adjacents sont affectés.

9. Procédé selon l'une des revendications 1 à 8,
dans lequel chacune desdites au moins deux stations de base (4, 4', 5), au moment de recevoir ledit masque de rayonnement, détermine des bandes de garde au niveau des périphéries de fragments affectés par rapport auxdites informations concernant la réduction d'un brouillage entre les différents opérateurs auxquels des fragments adjacents sont affectés.

10. Moyen de contrôle (3) pour affecter des sous-porteuses d'un spectre de fréquences à des opérateurs dans un système de communication sans fil à multiples porteuses, ledit moyen de contrôle (3) étant conçu pour contrôler au moins deux stations de base (4, 4', 5) pour une communication sans fil avec des terminaux (6, 7, 8) dans ledit système de communication sans fil à multiples porteuses, lesdites au moins deux stations de base (4, 4', 5) étant opérées par au moins deux opérateurs, ledit moyen de contrôle (3) comprenant :
un moyen de détermination (17), conçu pour déterminer une distribution de sous-porteuses, ladite distribution de sous-porteuses étant une affectation de fragments dudit spectre de fréquences auxdits au moins deux opérateurs, un fragment comprenant au moins une sous-porteuse et étant affecté uniquement à un desdits au moins deux opérateurs, mais pas à un autre desdits au moins deux opérateurs, et
un moyen de transfert (18), conçu pour transférer auxdites au moins deux stations de base (4, 4' 5) ladite distribution de sous-porteuses et un masque de rayonnement qui comprend des informations permettant à des stations de base (4, 4', 5) de réduire un brouillage entre différents opérateurs auxquels des fragments adjacents sont affectés, selon la synchronisation de fréquences entre les différents opérateurs auxquels des fragments adjacents sont affectés ;
le procédé étant **caractérisé en ce que** ledit masque de rayonnement est déterminé sur la base d'informations sur la synchronisation de fréquences entre les différents opérateurs auxquels des fragments adjacents sont affectés ;
un masque de rayonnement n'étant pas établi s'il est déterminé qu'une valeur reflétant la qualité de la synchronisation de fréquences entre les différents opérateurs auxquels des fragments adjacents sont affectés est supérieure à un seuil.

11. Moyen de contrôle (3) selon la revendication 10,
ledit moyen de contrôle (3) étant une unité de contrôle qui est séparée physiquement desdites au moins deux stations de base (4, 4', 5).

12. Moyen de contrôle (3) selon la revendication 10,
ledit moyen de contrôle (3) comprenant des éléments de contrôle fonctionnels distribués qui font respectivement partie desdites au moins deux stations de base (4, 4', 5).

13. Station de base (4, 4', 5) pour une communication sans fil avec des terminaux dans un système de communication sans fil à multiples porteuses qui comprend un moyen de contrôle central (3) selon l'une quelconque des revendications 10 à 12 et au moins deux stations de base (4, 4', 5) pour une communication sans fil avec des terminaux (6, 7, 8) dans ledit système de communication sans fil à multiples porteuses, lesdites au moins deux stations de base (4, 4', 5) étant opérées par au moins deux opérateurs, la station de base comprenant :
un moyen de réception (13) conçu pour recevoir, en provenance dudit moyen de contrôle central (3), une distribution de sous-porteuses, ladite distribution de sous-porteuses étant une affectation de fragments dudit spectre de fréquences auxdits au moins deux opérateurs, un fragment comprenant au moins une sous-porteuse et étant affecté uniquement à un desdits au moins deux opérateurs, mais pas à un autre desdits au moins deux opérateurs, et un masque de rayonnement qui comprend des informations permettant aux stations de base (4, 4', 5) de réduire un brouillage entre différents opérateurs auxquels des fragments adjacents sont affectés ; la station de base étant **caractérisée en ce que** ledit masque de rayonnement est déterminé sur la base d'informations sur la synchronisation de fréquences entre les différents opérateurs auxquels des fragments adjacents sont affectés ;
un masque de rayonnement n'étant pas établi s'il est déterminé qu'une valeur reflétant la qualité de la synchronisation de fréquences entre les différents opérateurs auxquels des fragments adjacents sont affectés est supérieure à un seuil.
